(19) Europäisches Patentamt / European Patent Office / Office européen des brevets

(11) **EP 1 695 579 B1**

(12) **EUROPEAN PATENT SPECIFICATION**

(45) Date of publication and mention
of the grant of the patent:
**29.04.2015 Bulletin 2015/18**

(21) Application number: **03768456.0**

(22) Date of filing: **17.12.2003**

(51) Int Cl.:
*H04W 48/18* (2009.01)  *H04W 36/00* (2009.01)
*H04W 88/06* (2009.01)

(86) International application number:
**PCT/SE2003/001963**

(87) International publication number:
**WO 2005/060294 (30.06.2005 Gazette 2005/26)**

(54) **Radio resource management in a communication system according to access relevant information related to system load extracted by sniffing messages**

Funkbetriebsmittelverwaltung in einem Kommunikationssystem gemäss Zugangsrelevanter Information in Bezug auf Systembelastung, welche durch Schnüffeln von Nachrichten entnommen wird

Gestion de ressources radio dans un système de communication selon une information pertinente pour l'accès relative à la charge du système et extraite par reniflement de messages

(84) Designated Contracting States:
**AT BE BG CH CY CZ DE DK EE ES FI FR GB GR HU IE IT LI LU MC NL PT RO SE SI SK TR**

(43) Date of publication of application:
**30.08.2006 Bulletin 2006/35**

(73) Proprietor: **Telefonaktiebolaget LM Ericsson (publ)**
**126 25 Stockholm (SE)**

(72) Inventors:
• **MAGNUSSON, Per**
**S-587 23 Linköping (SE)**
• **WALLENTIN, Pontus**
**S-582 17 Linköping (SE)**
• **MALMGREN, Göran**
**S-141 71 Huddinge (SE)**

(74) Representative: **Kühn, Friedrich Heinrich**
**Ericsson AB**
**Patent Unit Kista RAN 1**
**Torshamnsgatan 23**
**164 80 Stockholm (SE)**

(56) References cited:
**WO-A1-02/104054  WO-A1-03/069938**

• **3GPP TR 25.881 V5.0.0(2001-12), "Improvement of RRM across RNS and RNS/BSS (Release 5)", 3RD Generation Partnership Project; Technical Specification Group Radio Access Network, pages 1-44 XP002979249**

**Description**

FIELD OF THE INVENTION

The present invention relates to communication systems and methods, and more particularly it relates to systems and methods for managing radio resources in a multi-access communication system.

BACKGROUND OF THE INVENTION

In a communication system, a radio access network comprises multiple entities or nodes that co-operate in order to use the available radio resources in an efficient way. A co-operation is necessary for being able to take care of communication from and to terminals over the radio access network. The degree of cooperation is dependent on the design goal for the radio access network, such as simplicity, optimal use of available radio resources etc. This cooperation is taken care of by radio resource management functions at different levels of the system.

The radio resource management decisions are often based on input from multiple nodes in the network. For example, a radio network controller (RNC) in a WCDMA network makes radio resource management decisions based on inputs both from terminals, Node B's and other RNC's. For example, if a terminal is a candidate for doing a handover from one cell to another, the RNC needs to know the received signal quality at the terminal for signals from the two Node B's covering the two cells. The signal quality is measured at the terminals and the measurements are sent as input for the radio resource management to the RNC. The RNC also needs to know the load of the different Node B's, i.e. if any of the Node B's is close to using all its resources for other communications.

Future communication systems will be multi-access systems, i.e. the communication systems will include overlapping radio access networks using different access technologies, for example a communication system may comprise a WCDMA network, a GSM network and a Wireless Local Area Network (WLAN) covering the same area. Multi-access systems have emerged because it is hard to design one single access technology suitable for all kinds of services and all deployment scenarios in a communication system (e.g. personal area networks, indoor areas, hotspots, wide area networks etc.). It is also costly to replace previous generations of systems because the operator may loose existing customer base and because the systems are widely deployed. Furthermore, spectrum is in some cases allocated to a specific access technology.

In order to be able to connect a terminal in a multi-access communication system to the access network that has the best connection for the user's current communication purpose, there is a need to coordinate radio resource management for the different access networks in the multi-access communication system.

In the 3GPP standardisation prior art document 3GPP TS 25.413 v5.6.0 there is discussed a network based radio resource management system for the support of handover between WCDMA and GSM networks. When a radio network controller (RNC) in the WCDMA network detects that a handover is imminent from a WCDMA cell to a target GSM cell, the measured load of the current WCDMA cell is sent to the GSM network base station controller (BSC) controlling the area where the target GSM cell is situated. The measured load is sent via the core network over an existing interface called Iu. The load of the current WCDMA cell is normalised towards a linear scale (0-100) where 100 represents the maximum planned load. The GSM network then uses the load of the WCDMA cell to compare to its own cell load to judge whether it would be worth to handover the terminal to the GSM cell or not. In case the BSC decides not to go forward with the handover it may send the load of the GSM cell to the WCDMA network. This prior art document does not describe any coordinated radio resource management for the two networks more than coordination between cells involved in a handover. I.e. there is no common radio resource management function for the two networks.

In a second prior art document from the 3GPP standardisation body, called 3GPP TR 25.891 V0.3.0, enhancements to the system described in the above mentioned document is shown. In this second prior art document, a common radio resource management server (CRRM server) is described that may collect cell load measurement information from the RNCs in the WCDMA network and from the BSCs in the GSM network. These measurements may then be used to either take centralised handover decisions in the CRRM server or provide handover policy information from the CRRM server to the radio resource management functions in the RNCs that manage radio resources within the WCDMA network, and to the radio resource management functions in the BSCs that manage radio resources within the GSM network. The CRRM server may be either centralised as a stand-alone server or it may be distributed and integrated with every RNC/BSC or integrated only in some RNCs and/or BSCs. Therefore, this document has described a protocol for distributing cell load measurements to both a centralised CRRM server as well as between CRRM entities. Although, no measurements from the terminals are distributed to the CRRM server.

The enhanced system for managing radio resources described in this second prior art document uses a standardised protocol defining which information that should be sent in messages between the CRRM server and the different nodes in the GSM and the WCDMA network. With the CRRM server a management node is achieved that manage radio resources between a GSM and a WCDMA network. Although, if another network is to be attached to this communication system, for example a WLAN network, it would be necessary to standardise all interfaces between the new network and the CRRM server. Consequently, this system for managing radio resources is not easily expandable to manage radio resources in a communication system consisting of access networks using other access technologies than GSM or WCDMA. In addition, since no terminal measurements are distributed to the CRRM server, consequently the CRRM server does not take such measurements into consideration when managing radio resources.

A third prior art document from the 3GPP standardisation body, called 3GPP TR 25.881 V0.5.0.0, describes the techniques to improve the radio resource management across radio network subsystem and radio network subsystem/base station subsystem. A CRRM server is described that collects resource management functionality that can be related to multi-system functionality, so that this can be processed in the same algorithm.

Another prior art document WO02104054 A1 discloses a communication system comprising a CRRM that coordinates the use of the radio resources from different radio access systems. For this purpose the CRRM receives information that is required for the CRRM to perform the resource management algorithms from network elements. Thus, the document focuses on providing a CRRM-function in general.

Yet another prior art document WO03069938 A1 discloses a communication system with a decentralized functional unit for managing radio resources. A central functional unit (CRRM function) receives and evaluates information from the decentralized units. The CRRM signals information with respect to load targets to the decentralised units and this information is considered in an intersystem handover. Also this document focuses on providing a CRRM-function in general.

In the future, new access technologies will emerge that need to be merged into a multi-access communication system. One example of such an access technology that has recently emerged is wireless LAN. Therefore, and since there is an interest for both network operators and users to achieve a system where a user's terminal could access the communication system via all available access technologies, there is a need for a method and a system for managing radio resources in a multi-access communication system that easily could be expanded with new access technologies.

## SUMMARY OF THE INVENTION

As mentioned above, a modern communication system consists of access networks using different access technologies. The radio resources in the communication system need to be managed in order to connect a terminal in the system to the access network that has the best connection for the user's current communication purpose, and in order to achieve efficient use of the radio resources in the communication system. The solutions of today are especially configured to each access technology in the system such that each interface to a common radio resource handler is standardised. Therefore, if a new access network using a new access technology is to be merged into the system, with today's solution all new interfaces to the common radio resource handler needs to be standardised for the radio resource handler to be able to talk to the different nodes in the new access network. Consequently, great effort is needed and a long time will elapse before it is possible to merge a new access technology into such a solution.

An object of the invention is to achieve a solution for managing radio resources for providing wireless access to a communication system consisting of access networks using different access technologies, and wherein the solution can easily be adapted to manage radio resources for providing wireless access to a system that is expanded with new access networks using new access technologies.

The above stated object is achieved by means of a method according to claim 1, a listening agent according to claim 11 and a system according to claim 12.

The solution according to the present invention makes it possible to manage radio resources in a communication system consisting of access networks using different access technologies. By extracting access relevant information from existing messages within an access network, a new access network using a new technology can easily be added to the communication system and managed by a solution for managing radio resources according to the invention.

According to a first aspect of the present invention, a method is provided for managing radio resources for providing wireless access to a communication system to a number of terminals. The communication system comprises a first access network using a first access technology and second access network using a second access technology different from the first access technology. The method comprises the step of receiving access relevant information from the first access network and the second access network, wherein the received access relevant information comprises information extracted by sniffing messages sent within the first access network. The messages are sniffed by a listening agent. Sniffing a message includes reading a source address, a destination address and a data payload of the message without influencing the message such that a sender and a receiver of the message do not need to know that the message was sniffed. The access relevant information comprises information describing the state of the respective access network based on signal measurements and /or load measurements. The method further comprises the step of comparing the received access relevant information extracted from messages sent within the first access network to access relevant information received from the second access network. The method also comprises the step of determining which access network that provides the best connection to a terminal and which access network that should be accessed, based at least on the result of the comparison of the received access relevant information extracted from messages sent within the first access network to the access relevant information received from the second access network.

According to a second aspect of the invention, a listening agent is provided for use in a system for managing radio resources, which system provides wireless access to a communication system to a number of terminals, wherein the communication system comprises a first access network using a first access technology and a second access network using a second access technology different to the first access technology. The listening agent is arranged to extract access relevant information for at least the first access network by sniffing messages sent within at least the first access network. Sniffing a message includes reading a source address, a destination address and a data payload of the message without influencing the message such that a sender and a receiver of the message do not need to know that the message was sniffed. The access relevant information comprises information describing the state of the respective access network based on signal measurements and /or load measurements. The listening agent is also arranged to send the access relevant information to an access selection manager to allow the access selection manager (201) to determine which access network should be accessed based on the access relevant information.

According to a third aspect of the invention, a system is provided for managing radio resources for providing wireless access to a communication system to a number of terminals. The communication system comprises a first access network using a first access technology and a second access network using a second access technology different to the first access technology. The system for managing radio resources comprises at least one listening agent according to the above described second aspect . The system for managing radio resources also comprises an access selection manager arranged to compare the received access relevant information extracted from the first access network to access relevant information received from the second access network. The access selection manager is also arranged to determine which of the first access network and the second access network that provides the best connection to a terminal and which access network that should be accessed based at least on the result of the comparison of the access relevant information extracted from the first access network to the access relevant information received from the second access network.

An advantage of the invention is that it achieves efficient radio resource management in a multi-access communication system that is expanded with a new access network using a different access technology than used before in the system. Especially the invention achieves efficient radio resource management in a multi-access communication system comprising Wireless LANs and GSM and/or WCDMA networks.

A further advantage of the invention is that it makes it possible to use equipment in the new access network developed by different vendors without demanding standardisation of any new interfaces.

Further advantages of embodiments of the present invention will become apparent when reading the following detailed description in conjunction with the drawings.

BRIEF DESCRIPTION OF THE DRAWINGS

Figure 1 shows a schematic block diagram of a communication system wherein the present invention may be used.

Figure 2 is a schematic block diagram illustrating an embodiment of the present invention for managing radio resources in a multi-access communication system.

Figure 3 shows a schematic block diagram of a listening agent and an access selection manager for managing radio resources according to an embodiment of the invention.

Figure 4 shows a schematic block diagram of a GSM/WCDMA network with existing internal interfaces wherein the present invention may be used.

Figure 5 is a schematic block diagram illustrating a preferred embodiment of the invention where a listening agent is placed in a Layer 2 Switch in a WLAN network.

Figure 6 shows a diagram of the content of an IAPP ADD-notify message sent within WLAN networks.

Figure 7 shows a diagram of the content of an IAPP MOVE-notify message sent within WLAN networks.

Figure 8 shows a diagram of the content of a Layer 2 update frame message sent within WLAN networks.

Figure 9 shows a flowchart describing a method according to an embodiment of the present invention.

DETAILED DESCRIPTION

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention as defined in the appended claims to those skilled in the art. In the drawings, like numbers refer to like elements.

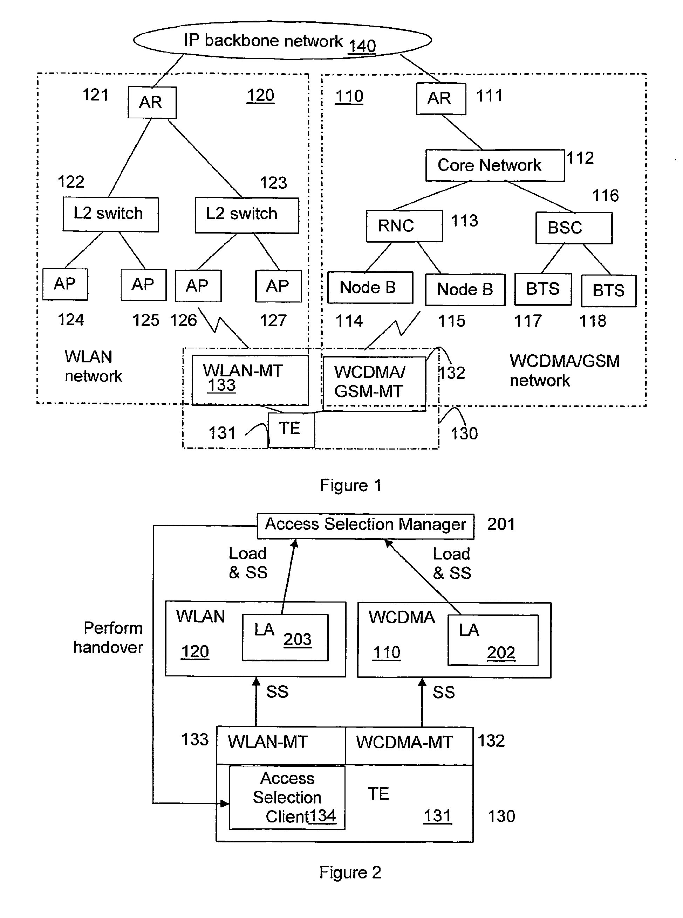

Figure 1 shows a typical multi access communication system where the present invention may be used, comprising a WCDMA/GSM network 110 and a WLAN network 120. The figure also shows a terminal 130 capable of communicating with both the WCDMA/GSM network 110 and the WLAN network 120. The terminal 130 comprises a terminal equipment 131, which is for example a general purpose computer such as a Personal Digital Assistant (PDA) or a laptop, and a mobile terminal 132, 133 containing access specific functions for accessing each different access technology network. In the figure, the access specific functions comprises a WLAN transceiver (WLAN-MT) 133 for communicating with the WLAN network 120 and a combined WCDMA/GSM transceiver (WCDMA/GSM-MT) 132 for communicating with the WCDMA/GSM network.

On the network side, the WCDMA/GSM network 110 comprises among other things, an access router 111, which is responsible for routing IP packets between an IP backbone network 140 and the WCDMA/GSM network 110. The WCDMA/GSM network 110 also comprises a core network 112 handling for example the communication between the GSM domain of the network 110 and the WCDMA domain of the network 110. The GSM domain of the network comprises among other things at least one base station controller (BSC) 116 and base transceiver stations (BTS) 117, 118 connected to the at least one BSC 116. The WCDMA domain of the network comprises among other things at least one radio network controller (RNC) 113 and Node B's 114, 115 connected to the at least one RNC 113. The Node B's 114, 115 cover certain WCDMA cells and the BTS's 117, 118 cover certain GSM cells. The WCDMA/GSM-MT 132 communicates with a respective Node B and/or BTS depending on the geographical position of the terminal 130.

The WLAN network 120 comprises an access router 121, which is responsible for routing IP packets between the IP backbone network and the WCDMA/GSM network. The WLAN network also comprises at least one Layer 2 switch 122, 123 and access points 124, 125, 126, 127. The access points handles the physical transmission and reception to/from the WLAN-MT 133 as well as the medium access control (MAC) functions such as retransmission of radio frames. The WLAN-MT 133 communicates with a respective access point 124, 125, 126, 127 depending on the geographical position of the terminal 130 and the current communication purpose of the user of the terminal.

In order to e.g. be able to connect a terminal in a multi-access communication system to the access network that has the best connection for the user's current communication purpose, there is a need to coordinate radio resource management for the different access networks in the multi-access communication system. In addition to consider the best possible connection for the user, there is also a need to coordinate radio resource management with the purpose of maximizing system performance. Also, there may be other reasons to coordinate the radio resources in a communication system, for example the radio resources may be coordinated with the purpose of prioritizing certain operator services etc.

For these purposes, there is a need to collect and evaluate access relevant information describing the state of the different networks. This access relevant information could be e.g. radio signal measurements, such as signal strength, regarding the radio connection between a terminal and an access point, base station or equivalent node. The access relevant information could also be e.g. any type of system load measurements, such as the load of an access point, base station or equivalent node. The access relevant information for the different networks needs to be collected and compared to be able to provide the best connection to the terminal of a user.

According to the invention, the access relevant information from at least a first access network is extracted from messages sent within at least the first access network. Thereafter, the access relevant information from at least the first access network is compared to the access relevant information received from the at least one second access network, and further it is determined which access network a terminal should access based on the comparison of the access relevant information extracted from messages sent within the first access network to the access relevant information received from the at least one second access network.

Figure 2 shows a schematic block diagram of a system according to an exemplary embodiment of the invention for managing radio resources for providing wireless access to a multi-access communication system to a number of terminals. In figure 2, the WLAN-MT 133 of a terminal 130 measures a WLAN radio signal quantity, e.g. WLAN signal strength (SS) and sends the WLAN SS measurement value to the WAN network 120. The WCDMA-MT 132 of the terminal 130 measures a WCDMA radio signal quantity, e.g. WCDMA signal strength (SS), and sends the WCDMA SS measurement value to the WCDMA network 110.

According to this exemplary embodiment of the invention, a number of first listening agents 203 placed in the WLAN network 120 sniffs existing messages distributed within the WLAN network with the purpose to find access relevant information in the messages. To sniff a message means to read not only the source and destination address of a message but also the data of the message without influencing the message. The sender and the receiver of the message do not need to know that the message was sniffed. The messages that are sniffed in the WLAN network 120 comprise access relevant information such as for example the WLAN SS measurements sent from the WLAN-MT 133 to the WLAN network 120 and/or information regarding the load in the WLAN network, such as the load of the access point that the WLAN-MT 133 has a radio connection with.

A number of second listening agents 202 placed in the WCDMA network 110 sniffs existing messages distributed within the WCDMA network with the purpose to find access relevant information in the messages. The messages that are sniffed in the WCDMA network 110 comprise access relevant information, such as the WCDMA. SS measurements sent from the WCDMA-MT 132 to the WCDMA network 110 and/or information regarding the load in the WCDMA network, such as the load of the Node B that the WCDMA-MT 132 has a radio connection with.

The number of first listening agents 203 and the number of second listening agents 202 extract the access relevant information from the sniffed messages within the WLAN network and the WCDMA network, respectively, and send the access relevant information to an access selection manager 201. The access selection manager 201 receives and compares the WLAN access relevant information received from the number of first listening agents 203 to the WCDMA access relevant information received from the number of second listening agents 202 and, based on this comparison, determines which access network the terminal 130 should access. This determination may for example result in a handover decision from one access network to the other, which decision is then communicated from the access selection manager 201 to the terminal 130. An access selection client 134 in the terminal 130 then initiates a mobile IP handover from one access network to the other. Alternatively, the decision is communicated to one or both networks, which initiates a network controlled handover.

Some access relevant information regarding similar quantities for different networks are not directly comparable. Therefore, the information may have to be converted to an access-independent quantity before the access relevant information for different networks is compared in the access selection manager 201.

Also, at least part of the access relevant information from the WCDMA network could, according to the invention, except from being extracted from existing messages within the WCDMA network, also be obtained as standardised messages received on a dedicated channel from the WCDMA network to the access selection manager, e.g. from a common radio resource management server in the WCDMA network.

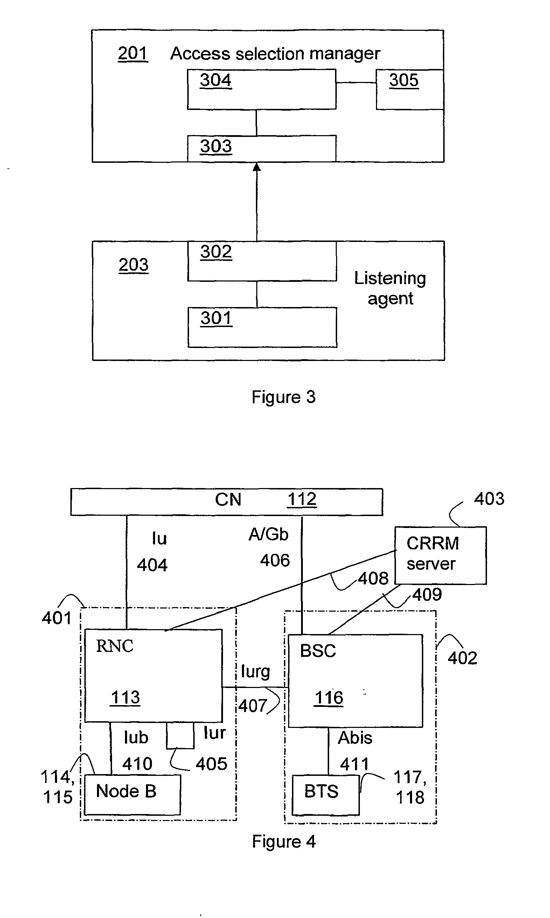

Figure 3 is a schematic block diagram illustrating an embodiment of a listening agent 203 and an access selection manager 201 according to the present invention. The listening agent 203 is placed in a node in an access network, and it comprises a listening unit 301 that is arranged to sniff messages sent within the access network and to extract access relevant information from the sniffed messages. The listening agent 203 also comprises a communication interface 302 that is arranged to send the extracted access relevant information to the access selection manager 201. The access selection manager 201 comprises a communication interface 303 arranged to receive the access relevant information from the listening agent 203. The access selection manager 201 is illustrated with a single communication interface 302, but it is also possible, and probable, that the access selection manager has several communication interfaces communicating with several listening agents. The access selection manager also comprises a processing unit 304 arranged to compare access relevant information received from listening agents placed in different access networks. The processing unit 304 is also arranged to determine which of the different access networks a terminal should access based on the comparison of the access relevant information received from the listening agents placed in the different access networks. Since the determination may result in a handover decision from one access network to another access network, the access selection manager may also comprise a sending unit 305 that is arranged to communicate handover decisions from the access selection manager 201 to the terminal 130. Alternatively, handover decisions may be communicated to one or both involved access networks, which then initiates a network controlled handover.

Figure 4 shows a WCDMA/GSM network 110 comprising a WCDMA radio access network (UTRAN) 401 and a GSM EDGE radio access network (GERAN) 402, connected by a core network 112. In this figure, existing internal interfaces are shown over which interfaces messages are sent that comprise access relevant information. Listening agents according to the invention may be used anywhere in this network to sniff messages sent over the internal interfaces and extract the access relevant information from the messages sent over the shown internal interfaces in the WCDMA/GSM network. The WCDMA radio access network 401 comprises among other things an RNC 113 and a Node B 114, 115. The GSM EDGE radio access network 402 comprises among other things a BSC 116 and a BTS 117, 118. Messages sent over the A/Gb-interface 406 between the GERAN 402 and the core network 112 may comprise access relevant information such as handover/relocation information (i.e. information necessary for performing a handover) and load information that could be sniffed and extracted according to the invention. Other examples of interfaces over which messages are sent that may comprise access relevant information such as handover/relocation information and load information that could be sniffed and extracted according to the invention are the Iu-interface 404 between the UTRAN 401 and the core network 112, the Iurg-interface 407 between the UTRAN 401 and the GERAN 402, the Iub-interface 410 between a Node B 114, 115 and an RNC 113, the Abis-interface 411 between a BTS 117, 118 and a BSC 116, and the Iur-interface 405 between RNCs 113 within the UTRAN 401. It would also be possible to sniff and extract access relevant information from messages sent over an interface 408 between a common radio resource management (CRRM) server 403 and the UTRAN 401, and over an interface 409 between the CRRM server 403 and the GERAN 402. The CRRM server collects cell load information from RNCs and BSCs, information that is used to handle radio resources in a communication system comprising only a WCDMA/GSM network 110. The CRRM server and its function is described in prior art document 3GPP TR 25.891 V0.3.0 mentioned above. According to the invention, listening agents may be situated in both the CRRM server and in nodes in the WCDMA/GSM network.

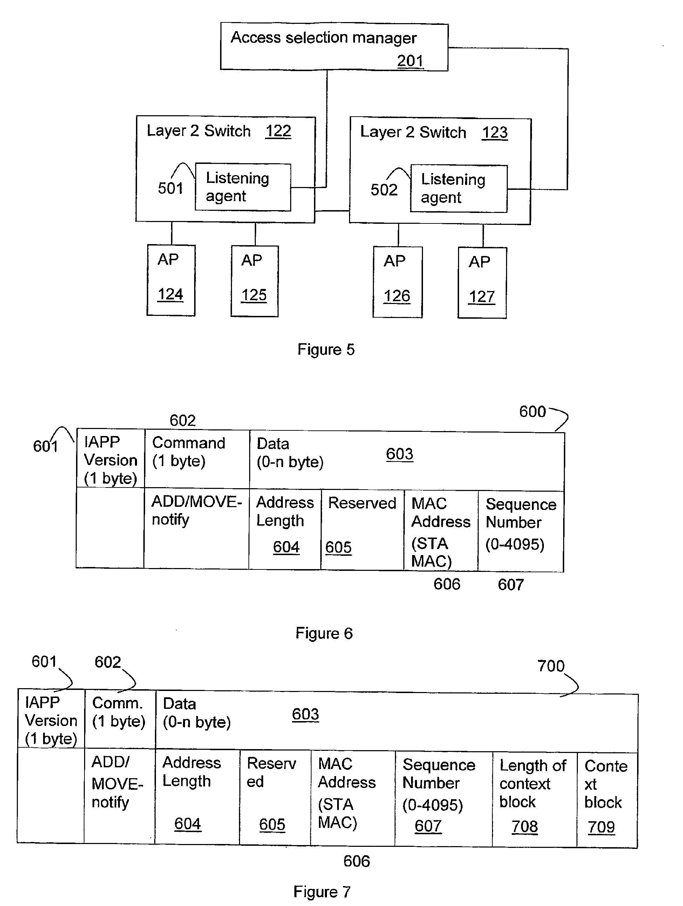

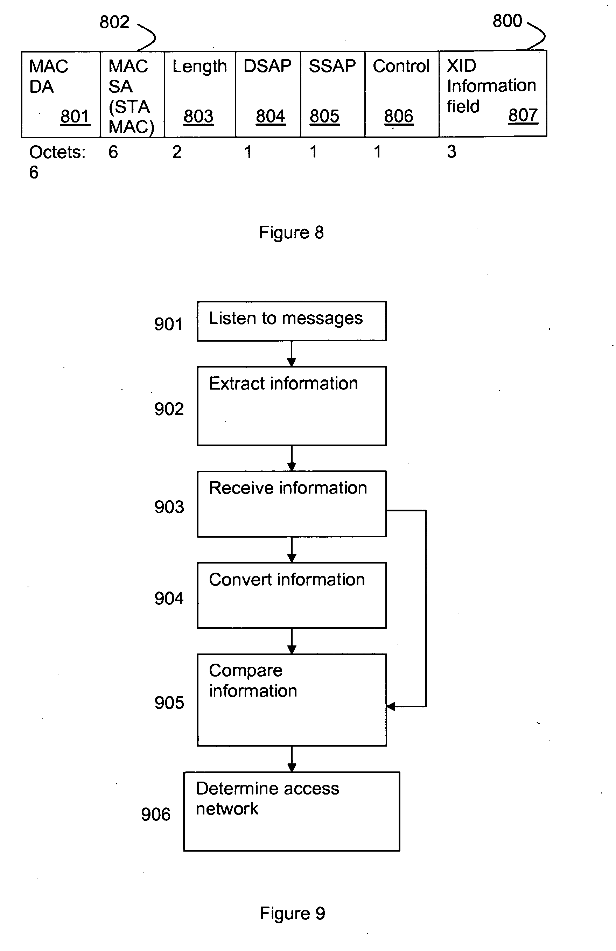

In figure 5 an exemplary embodiment of the invention is shown where access relevant information is extracted from messages communicated within a WLAN network according to the Inter Access Point Protocol (IAPP). The IAPP is a communication protocol used by the management entity of an access point 124 to communicate with other access points 125, 126, 127 when various local events occur in the access point 124. A listening agent 501, 502 placed at a node that connects access points can sniff IAPP messages communicated between these access points, extract access relevant information from the IAPP messages and send the information to the access selection manager 201. A listening agent can suitably be placed within a layer 2 switch 122, 123, which is directly connected to one or more access points 124, 125, 126, 127. By placing the listening agents in the layer 2 switches 122, 123 the number of listening agents necessary for detecting access relevant information for the terminals in the network will be minimized. The access relevant information is received according to this embodiment of the invention by sniffing either IAPP ADD-notify messages and IAPP MOVE-notify messages or layer 2 update frames, which are sent after a terminal has associated or reassociated with a new access point, i.e. after a terminal has connected or reconnected with a new access point. By listening to these messages, information of the source and/or destination access point for the communication exchange as well as terminal identity can be detected and extracted from the messages. The information of source and destination access point for a communication exchange can be used in the access selection manager to e.g. calculate the load of an access point. The process of extracting this access relevant information is shown below in association with figure 6 for IAPP ADD-notify messages, in association with figure 7 for IAPP MOVE-notify messages and in association with figure 8 for Layer 2 update frame messages.

The IAPP ADD-notify message 600 provides information that a terminal has associated with a first access point. The IAPP ADD-notify packet is sent over the User Datagram Protocol (UDP) and IP on the local LAN segment to notify other access points within the network that the terminal has associated with the first access point, wherein the IAPP ADD-notification uses the IAPP IP multicast address, the source IP address and MAC address of the access point. The source IP address of the access point is found in the IP-header of the IAPP message. The content of an IAPP ADD-notify message is shown in figure 6. The IAPP ADD-notify message 600 contains information about the IAPP version 601, which IAPP command 602 it is (0 means ADD-notify), and the message data 603. The message data contains the address length 604, a reserved field 605 , the MAC address 606 of the terminal and the sequence number 607. This message will always be sent whenever a terminal associates with an access point and the purpose of the message is to remove stale associations in other access points. A listening agent that is placed in the nearest layer 2 switch sniffs this IAPP ADD-notify message, extracts the information about the terminal address from the MAC address field 606 and sends this information to the access selection manager, together with the source IP address of the access point that the terminal has associated with, which is extracted from the IP header of the IAPP message. The access selection manager then knows that a terminal with this MAC address has associated with the access point with this source IP address.

The IAPP MOVE-notify packet provides information that a terminal has reassociated with a new access point. The IAPP-MOVE-notify packet is sent directly to the old access point using TCP/IP, requesting the old access point to remove the terminal from its table and to forward any stored context for the terminal by sending a MOVE-response message, and in the MOVE-response message requesting the new access point to add the terminal and the context to its own table. The content of an IAPP MOVE-notify message is shown in figure 7. It differs from the content of the IAPP ADD-notify message shown in figure 6 in that the message data 603 also contains a part defining the length of the context block 708 and the context block 709. The IAPP command byte 602 reveals whether it is a MOVE-notify message (command byte = 1) or an ADD-notify message (command byte =0). A listening agent that is placed in the nearest layer 2 switch sniffs the IAPP MOVE-notify message, extracts the information about the terminal address in the MAC address field 606 and sends this information to the access selection manager, together with the source IP address of the access point that the terminal has associated with, which is extracted from the IP header of the IAPP message. The access selection manager then knows that a terminal with this MAC address has reassociated with the new access point with this source IP address.

The access selection manager uses this information together with earlier received information regarding other terminals that has associated or reassociated with the different access points as an indication of the load of the access points. The load of the access points can then be used by the access selection manager when determining which access network a terminal should access.

In case of encrypted communication it is possible that the IAPP communication is encrypted. Then information cannot be extracted from the IAPP MOVE-notify and IAPP ADD-notify messages, but it is still possible to listen to Layer 2 update frame messages, for example by a listening agent placed in the Layer 2 switch. The Layer 2 update frame messages follows IAPP MOVE-notify messages and IAPP ADD-notify messages. The Layer 2 update frame message is an 802.11 type 1 Logical Link Control (LLC) Exchange Identifier (XID) Update response frame with the content shown in figure 8. The Layer 2 update frame message 800 contains a MAC destination address (MAC DA) 801, which is the broadcast MAC address to all devices connected to this segment, and a MAC source address 802, which is the MAC address of the terminal that has associated/reassociated. It also contains information about frame length 803, destination service access point (DSAP) 804, source service access point (SSAP) 805, a control bit 806 and an XID information field 807. DSAP and SSAP are used to identify which upper layer protocol that is used. The purpose of the Layer 2 update frame message is to update all Layer 2 devices (e.g. bridges, switches and other access points) in order for them to reach the new location (access point) of the terminal. According to the invention, a listening agent that is placed in the nearest layer 2 switch listens to this Layer 2 update frame message, extracts the information about the terminal address in the MAC source address field 802 and sends this information together with the ID of the new access point to the access selection manager. The ID of the new access point is extracted by identifying which port this message is received on in the layer 2 switch. The access selection manager then knows that a terminal with this MAC address has reassociated with the new access point that sent this message.

Both the access relevant information extracted from the IAPP messages and the Layer 2 update frames enable the access selection manager to keep track of the number of associated terminals in each access point. This is used by the access selection manager as a load measure when comparing the WLAN network with other access networks. Note that there is no message that tells the access selection manager that a terminal has stopped using the access point. One solution for the access selection manager to find out if a terminal is no longer active is to associate an inactivity timer with each terminal listed in the access selection manager and remove the terminal from the access selection manager list of associated terminals if no handover has taken place within a certain time. Another more detailed solution is to listen to the user plane traffic for each terminal in the listening agents and use this as input whether the terminal is active or not. User plane traffic means the data traffic to and from a terminal. In this case, if no user plane traffic has been received or transmitted within a certain time, the terminal is removed from the access selection manager list of associated terminals.

The user plane traffic may also be monitored for other reasons. By letting the listening agents listen to the user plane traffic, it is possible to extract and calculate traffic volume (total number of bits transmitted) and throughput (bits/second) for each terminal, which would provide a more detailed level of load information at each access point. This more detailed load information may be used by the access selection manager to more accurately manage the radio resources. Listening agents for listening to the user plane traffic may be situated in the layer 2 switches that are directly connected to an access point or they may be situated directly in each access point.

Below another exemplary embodiment of the invention is shown describing how access relevant information can be extracted from messages communicated within a WLAN network. In this exemplary embodiment, access relevant information is extracted from messages sent according to a protocol called Light Weight Access Point Protocol (LWAPP). LWAPP is a protocol allowing a router or switch to interoperably control and manage a collection of wireless access points. The LWAPP protocol comprises the message categories packet forwarding and access router configuration, which may contain access relevant information.

In packet forwarding, packets to/from mobile terminals are forwarded to/from an access router via an access point encapsulated in LWAPP packets. Uplink packets (i.e. packets sent from a terminal to an access point) include access relevant information such as the signal strength and the signal to noise ratio with which an 802.11 frame was received by the mobile terminal over the radio interface. These packets may according to the invention be sniffed by a listening agent placed e.g. in the access router. The listening agents may except from being situated in the access router be situated closer to the access points or in the access points. The listening agent extracts the access relevant information and sends this information to the access selection manager.

Access router configuration messages are used by the access router to push a specific configuration to the access points it has a control channel with. Messages that deal with the retrieval of statistics from the access points also fall in this category. Especially the messages that deal with the retrieval of statistics contain access relevant information. The statistics is included in a Statistics Report LWAPP message sent from an access point to the access router. This message contains a number of counters indicating the operational status of the access point's transmission and reception of data frames. Examples of statistical counters included in the message are the "Tx Fragment Count" and "Rx Fragment Count" that indicate the number of fragmented frames transmitted and received by the access point, respectively. Since the Statistics Report LWAPP message is sent repeatedly, these two counters can be used to calculate the average downlink and uplink load for the particular access point between two received statistics messages (previous message is received at time "time old" and the last message is received at the time "time new", time is elapsed seconds), measured in transmitted (or received) number of fragmented frames per second using the following formulas:

$$Downlink\ load = (Tx\ frag\ new - Tx\ frag\ old) / (time\ new - time\ old),$$

where
"Tx frag new" is the received value of the "Tx Fragment Count" at the time "time new", and "Tx frag old" is the received value of the "Tx Fragment Count" at the time "time old".

$$Uplink\ load = (Rx\ frag\ new - Rx\ frag\ old) / (time\ new - time\ old),$$

where
"Rx frag new" is the received value of the "Rx Fragment Count" at the time "time new", and "Rx frag old" is the received value of the "Rx Fragment Count" at the time "time old".

A listening agent situated e.g. in the access router may extract the Tx fragment count and the Rx fragment count from the Statistics Report LWAPP message and send this information to the access selection manager, which may calculate the uplink or downlink load for the respective access point according to the above. The calculation may also be done in the listening agent.

Below another exemplary embodiment of the invention is shown on how access relevant information is extracted from messages communicated within a WLAN network. In this example, access relevant information is extracted from messages sent according to a protocol defined by an IEEE emerging standard called 802.11k. This emerging standard will define measurement reports comprising measurements of radio conditions, such as received signal power. It will also define reports comprising load measurements, for example indicating how large portion of the time a WLAN channel is busy, which is indicated by the clear channel assessment (CCA) busy fraction. A WLAN channel is a connection to an access point that can be used by many terminals. This access relevant information may be extracted from the messages containing the measurement reports by a listening agent placed e.g. in the access point sniffing the channel load reports.

The access relevant information extracted as described in the examples above is then sent to an access selection manager to perform multi-access related decisions, by comparing the access relevant information from one network, e.g WLAN with access relevant information from other networks such as WCDMA and/or GSM networks. For example, the WLAN signal strength measurements collected from e.g. packet forwarding in LWAPP are compared to similar measurements for WCDMA and GSM to form the basis of determining whether a particular mobile terminal is best served by a particular WLAN access point or GSM/WCDMA cell.

Access relevant information from different networks is in many cases not directly comparable. Therefore, to enable a determination whether a terminal is best served in a first or a second network, it may be necessary to convert access relevant information from the first and/or the second network into comparable quantities. This conversion takes preferably place in the access selection manager, but it may also take place in the listening agent. Below is shown examples of how to convert and compare access relevant information such as signal strength and load to quantities comparable between GSM, WCDMA and WLAN.

A first example describes how to convert load measurements from different access networks into comparable quantities. Load measurements from GSM and WCDMA has according to prior art been normalised by the BSC and the RNC towards a linear scale (0-100) where 100 represents the maximum planned load. The WLAN load measure "number of associated users", extracted from sniffing e.g. IAPP communication, and compiled in the access selection manager is therefore also converted towards a linear scale between 0-100. The conversion is done according to the following: If in this example it is assumed that an access point has been dimensioned to handle N associated terminals and the access point currently has n associated terminals, the following formula gives a load measure comparable to the WCDMA and GSM load measure:

$$WLAN\ load\ measure = n/N*100$$

Thereby, the different load measurement quantities have been converted to the same comparable quantity, and may be compared with the purpose of determining which access network a terminal should access.

Another example of converting access relevant information into comparable quantities describes how to convert a WLAN channel load measurement extracted for example from 802.11k measurement reports to a load measure on a scale between 0-100, i.e. comparable to the load measurements that can be extracted from GSM and/or WCDMA. From the 802.11k measurement reports the measure Clear Channel Assessment (CCA) Busy Fraction is extracted, which contains information of how large portion of the time the channel was busy during the measurement duration, which indicates channel load. As WLAN is using terminal based CSMA (Carrier Sense Multiplex Access) as opposed to WCDMA where the network schedules resources, the delay will increase exponentially for WLAN when the load is increased compared to WCDMA where the delay will in practise be very low until a fully loaded system is reached. Therefore, the invention proposes to introduce a conversion function to be able to perform a fair comparison between such load measures for CSMA (WLAN) and network based scheduling systems (GSM or WCDMA).

$$Load\_measure\_network \; = F(load \; measure\_csma)$$

Also, measurements regarding radio connections for different access networks may need to be converted into comparable quantities before they are compared. For WLAN, the measurement values indicating radio conditions e.g. signal power used in downlink or uplink, signal strength or signal to noise ratio may be extracted from different messages sent within the WLAN network. For WCDMA, the received signal code power (RSCP) measurement can be extracted from the RRC MEASUREMENT REPORT message sent from the mobile terminal to the RNC, when the mobile terminal has an ongoing WCDMA connection. An alternative is to extract Ec/No measurement values indicating signal quality. For GSM, for example the SSLEV (signal strength) and SQUAL (signal quality) measurement values sent in MEASUREMENT REPORT messages from the mobile terminal to the BTS and then to the BSC can be extracted. The WLAN, GSM and WCDMA measurement values are sent to the access selection manager and converted to a comparable quantity before they are compared.

The access selection manager according to the invention is for the sake of simplicity shown in the figures as one functional entity residing in one place, but the function of the access selection manager might as well be distributed.

Figure 9 is a flowchart describing an exemplary embodiment of a method according to the invention for managing radio resources for providing wireless access to a communication system to a number of terminals, wherein the communication system comprises a first access network using a first access technology and at least one second access network using at least one second access technology different from the first access technology.

The method starts by listening 901 to messages sent within at least the first access network with the purpose of finding access relevant information in the messages. This step of listening to the messages sent within at least the first access network is preferably done by sniffing the messages. The found access relevant information is then extracted 902 from the sniffed messages. Thereafter, the extracted access relevant information is received 903 by a common access selection manager function, which also receives access relevant information from the at least one second access network. The access relevant information received from the at least one second access may be extracted from messages sent within the at least one second access network in the same manner as for the access relevant information in the first access network, but it may also be received in another way, for example as a standardised message on a dedicated channel. After being received, the access relevant information from the different networks is converted 904, if necessary, to a comparable, and preferably access-independent quantity. This step of converting 904 access relevant information may be omitted if the access relevant information from the different networks are already expressed in comparable quantities. When the access relevant information received from the different access networks are expressed in comparable quantities they are compared 905 with the purpose of determining 906 which access network a terminal should access.

As shown in the application, the object of the invention is to achieve a solution for managing radio resources for providing wireless access to a communication system consisting of access networks using different access technologies, and wherein the solution can easily be adapted to manage radio resources for providing wireless access to a system that is expanded with a first access network using a new access technology. This is achieved by receiving access relevant information from the first access network and at least one second access network, wherein the received access relevant information comprises information extracted from messages sent within the first access network. It is further achieved by comparing the received access relevant information extracted from messages sent within the first access network to access relevant information received from the at least one second access network, and determining which access network a terminal should access based on the comparison of the received access relevant information extracted from messages sent within the first access network to the access relevant information received from the at least one second access network.

In the drawings and specification, there have been disclosed preferred embodiments and examples of the invention and, although specific terms are employed, they are used in a generic and descriptive sense only and not for the purpose of limitation, the scope of the invention being set forth in the following claims.

**Claims**

1.  A method for managing radio resources for providing wireless access to a communication system to a number of terminals (130), wherein the communication system comprises a first access network (120) using a first access technology and a second access network (110) using a second access technology different from the first access technology, wherein the method comprises the steps of

    receiving access relevant information from the first access network (120) and the second access network (110), wherein the access relevant information comprises information describing the state of the respective access network based on signal measurements and/or information providing a load indication,

    comparing the received access relevant information extracted from messages sent within the first access network (120) to access relevant information received from the second access network (110), and

    determining which access network that provides the best connection to a terminal (130) and which access network that should be accessed, based on at least the result of the comparison of the received access relevant information extracted from messages sent within the first access network to the access relevant information received from the second access network,

    **characterized in that**

    the received access relevant information comprises information extracted by sniffing messages sent within the first access network (120), wherein the messages are sniffed by a listening agent, wherein sniffing a message includes reading a source address, a destination address and a data payload of the message without influencing the message such that a sender and a receiver of the message do not need to know that the message was sniffed.

2.  The method according to claim 1 wherein the first access network (120) is a wireless local area network.

3.  The method according to claim 1 or 2 wherein at least part of the messages sent within the first access network (120) are messages sent between access points.

4.  The method according to claim 3 wherein the at least part of the messages sent within the first access network (120) are defined by the Inter-Access Point Protocol (IAPP).

5.  The method according to any of claims 1-4 wherein the extracted access relevant information comprises an identification of a terminal (130) and an identification of an access point that the terminal has associated with.

6.  The method according to claim 1 or 2 wherein at least part of the access relevant information is extracted by sniffing user plane traffic for at least one terminal (130), which access relevant information is used to calculate traffic volume and/or throughput of the at least one terminal.

7.  The method according to claim 1 or 2 wherein at least part of the messages sent within the first access network (120) are sent between access points and a router.

8.  The method according to claim 7 wherein the at least part of the messages sent within the first access network (120) are defined by the Light Weight Access Point Protocol (LWAPP).

9.  The method according to claim 1 or 2 wherein at least part of the messages sent within the first access network (120) are sent between at least one terminal and an access point.

10. The method according to any of claims 1-9 wherein at least part of the access relevant information extracted by sniffing messages sent within the first access network (120) indicates how frequently a channel was busy, which indicates a load of the channel.

11. A listening agent (202, 203) for use in a system for managing radio resources, which system provides wireless access to a communication system to a number of terminals (130), wherein the communication system comprises a first access network (120) using a first access technology and a second access network (110) using a second access technology different to the first access technology, **characterized in that** the listening agent (202, 203) is arranged to

    extract access relevant information for at least the first access network by sniffing messages sent within at least the first access network, wherein sniffing a message includes reading a source address, a destination address and a data payload of the message without influencing the message such that a sender and a receiver of the message do not need to know that the message was sniffed and wherein the access relevant information comprises information describing the state of the access network based on signal measurements and/or information providing a load indication; and arranged to

send the access relevant information to an access selection manager (201) to allow the access selection manager to determine which access network should be accessed based on the access relevant information.

12. A system for managing radio resources for providing wireless access to a communication system to a number of terminals (130), wherein the communication system comprises a first access network (120) arranged to use a first access technology and a second access network (110) arranged to use a second access technology different to the first access technology, **characterized in that** the system for managing radio resources comprises

at least one listening agent (202, 203) according to claim 11, and

an access selection manager (201) arranged to

compare the received access relevant information extracted from the first access network (120) to access relevant information received from the second access network (110), ; and arranged to

determine which of the first access network (120) and the second access network (110) provides the best connection to a terminal (130) and which access network should be accessed based at least on the result of the comparison of the access relevant information extracted from the first access network (120) to the access relevant information received from the second access network (110).

13. The system according to claim 12 wherein the first access network (120) is a wireless local area network.

14. The system according to claim 12 or 13 wherein at least part of the messages sent within the first access network (120) are messages sent between access points.

15. The system according to claim 14 wherein the at least part of the messages sent within the first access network (120) are defined by the Inter-Access Point Protocol (IAPP).

16. The system according to any of claims 12-15 wherein the extracted access relevant information comprises an identification of a terminal (130) and an identification of an access point that the terminal has associated with.

17. The system according to claim 12 or 13 wherein the at least one listening agent is arranged to extract at least part of the access relevant information by sniffing user plane traffic for at least one terminal (130), and wherein the system comprises means for using said access relevant information to calculate traffic volume and/or throughput of the at least one terminal.

18. The system according to claim 12 or 13 wherein at least part of the messages sent within the first access network (120) are sent between access points and a router.

19. The system according to claim 18 wherein the at least part of the messages sent within the first access network (120) are defined by the Light Weight Access Point Protocol ,LWAPP.

20. The system according to claim 12 or 13 wherein at least part of the messages sent within the first access network (120) are sent between at least one terminal and an access point.

21. The system according to any of claims 12-20 wherein at least part of the access relevant information extracted by sniffing messages sent within the first access network (120) indicates how frequently a channel was busy, which indicates a load of the channel.

**Patentansprüche**

1. Verfahren zum Verwalten von Funkressourcen zum Bereitstellen von drahtlosem Zugang zu einem Kommunikationssystem zu einer Anzahl von Endgeräten (130), worin das Kommunikationssystem ein erstes Zugangsnetz (120) umfasst, das eine erste Zugangstechnologie verwendet, und ein zweites Zugangsnetz (110), das eine zweite Zugangstechnologie verwendet, die von der ersten Zugangstechnologie verschieden ist, worin das Verfahren die folgenden Schritte umfasst

Empfangen von zugangsrelevanter Information vom ersten Zugangsnetz (120) und dem zweiten Zugangsnetz (110), worin die zugangsrelevante Information Information umfasst, die den Zustand des jeweiligen Zugangsnetzes auf der Basis von Signalmessungen und/oder Information beschreibt, die eine Belastungsanzeige bereitstellt,

Vergleichen der empfangenen zugangsrelevanten Information, die aus innerhalb des ersten Zugangsnetzes (120) gesendeten Nachrichten extrahiert wird, mit zugangsrelevanter Information, die aus dem zweiten Zugangsnetz (110) empfangen wird,
und

Bestimmen, welches Zugangsnetz die beste Verbindung mit einem Endgerät (130) bereitstellt und auf welches Zugangsnetz zugegriffen werden sollte, mindestens auf der Basis des Ergebnisses des Vergleichs der empfangenen zugangsrelevanten Information, die aus innerhalb des ersten Zugangsnetzes gesendeten Nachrichten extrahiert wird, mit der zugangsrelevanten Information, die vom zweiten Umgangsnetz empfangen wird,

**dadurch gekennzeichnet, dass**

die empfangene zugangsrelevante Information Information umfasst, die durch Schnüffeln von innerhalb des ersten Zugangsnetzes (120) gesendeten Nachrichten extrahiert wird, worin die Nachrichten von einem Lausch-Agent geschnüffelt werden, worin das Schnüffeln einer Nachricht das Lesen einer Quelladresse, einer Zieladresse und eines Daten-Payloads der Nachricht einschließt, ohne die Nachricht zu beeinflussen, sodass ein Sender und ein Empfänger der Nachricht nicht wissen müssen, dass die Nachricht geschnüffelt wurde.

2. Verfahren nach Anspruch 1, worin das erste Zugangsnetz (120) ein drahtloses lokales Netz ist.

3. Verfahren nach Anspruch 1 oder 2, worin mindestens ein Teil der Nachrichten, die innerhalb des ersten Zugangsnetzes (120) gesendet werden, zwischen Zugangspunkten gesendete Nachrichten sind.

4. Verfahren nach Anspruch 3, worin der mindestens eine Teil der Nachrichten, die innerhalb des ersten Zugangsnetzes (120) gesendet werden, durch das IAP(Inter-Access Point)-Protokoll definiert sind.

5. Verfahren nach einem der Ansprüche 1-4, worin die extrahierte zugangsrelevante Information eine Identifikation eines Endgeräts (130) und eine Identifikation eines Zugangspunkts umfasst, mit dem sich das Endgerät assoziiert hat.

6. Verfahren nach Anspruch 1 oder 2, worin mindestens ein Teil der zugangsrelevanten Information durch Schnüffeln von Verkehr auf Benutzerebene für mindestens ein Endgerät (130) extrahiert wird, welche zugangsrelevante Information verwendet wird, um Verkehrsvolumen und/oder Durchsatz des mindestens einen Endgeräts zu berechnen.

7. Verfahren nach Anspruch 1 oder 2, worin mindestens ein Teil der Nachrichten, die innerhalb des ersten Zugangsnetzes (120) gesendet werden, zwischen Zugangspunkten und einem Router gesendet werden.

8. Verfahren nach Anspruch 7, worin der mindestens eine Teil der Nachrichten, die innerhalb des ersten Zugangsnetzes (120) gesendet werden, durch das LWAP(Light Weight Access Point)-Protokoll definiert sind.

9. Verfahren nach Anspruch 1 oder 2, worin mindestens ein Teil der Nachrichten, die innerhalb des ersten Zugangsnetzes (120) gesendet werden, zwischen mindestens einem Endgerät und einem Zugangspunkt gesendet werden.

10. Verfahren nach einem der Ansprüche 1-9, worin mindestens ein Teil der zugangsrelevanten Information, die durch Schnüffeln von innerhalb des ersten Zugangsnetzes (120) gesendeten Nachrichten extrahiert wird, anzeigt, wie oft ein Kanal belegt war, was eine Belastung des Kanals anzeigt.

11. Lausch-Agent (202, 203) zur Verwendung in einem System zum Verwalten von Funkressourcen, welches System drahtlosen Zugang zu einem Kommunikationssystem zu einer Anzahl von Endgeräten (130) bereitstellt, worin das Kommunikationssystem ein erstes Zugangsnetz (120) umfasst, das eine erste Zugangstechnologie verwendet, und ein zweites Zugangsnetz (110), das eine zweite Zugangstechnologie verwendet, die von der ersten Zugangstechnologie verschieden ist, **dadurch gekennzeichnet, dass** der Lausch-Agent (202, 203) angeordnet ist zum

Extrahieren von zugangsrelevanter Information für mindestens das erste Zugangsnetz durch Schnüffeln von Nachrichten, die mindestens innerhalb des ersten Zugangsnetzes gesendet werden, worin das Schnüffeln einer Nachricht einschließt, dass eine Quelladresse, eine Zieladresse und ein Daten-Payload der Nachricht gelesen werden, ohne die Nachricht zu beeinflussen, sodass ein Sender und ein Empfänger der Nachricht nicht wissen müssen, dass die Nachricht geschnüffelt wurde, und worin die zugangsrelevante Information Information umfasst, die den Zustand des Zugangsnetzes auf der Basis von Signalmessungen und/oder Information beschreibt, die eine Belastungsanzeige bereitstellt; und angeordnet ist zum

Senden der zugangsrelevanten Information an einen Zugangsauswahl-Manager (201), um dem Zugangsauswahl-Manager das Bestimmen zu ermöglichen, auf welches Zugangsnetz auf der Basis der zugangsrelevanten Information zugegriffen werden sollte.

**12.** System zum Verwalten von Funkressourcen zum Bereitstellen von drahtlosem Zugang zu einem Kommunikationssystem zu einer Anzahl von Endgeräten (130), worin das Kommunikationssystem ein erstes Zugangsnetz (120) umfasst, das dazu angeordnet ist, eine erste Zugangstechnologie zu verwenden, und ein zweites Zugangsnetz (110), das dazu angeordnet ist, eine zweite Zugangstechnologie zu verwenden, die von der ersten Zugangstechnologie verschieden ist, **dadurch gekennzeichnet, dass** das System zum Verwalten von Funkressourcen Folgendes umfasst:

mindestens einen Lausch-Agent (202, 203) nach Anspruch 11, und
einen Zugangsauswahl-Manager (201), angeordnet zum Vergleichen der empfangenen zugangsrelevanten Information, die aus dem ersten Zugangsnetz (120) extrahiert wird, mit zugangsrelevanter Information, die aus dem zweiten Zugangsnetz (110) empfangen wird; und angeordnet zum
Bestimmen, welches des ersten Zugangsnetzes (120) und des zweiten Zugangsnetzes (110) die beste Verbindung mit einem Endgerät (130) bereitstellt und auf welches Zugangsnetz zugegriffen werden sollte, mindestens auf der Basis des Ergebnisses des Vergleichs der zugangsrelevanten Information, die aus dem ersten Zugangsnetz (120) extrahiert wird, mit der zugangsrelevanten Information, die vom zweiten Zugangsnetz (110) empfangen wird.

**13.** System nach Anspruch 12, worin das erste Zugangsnetz (120) ein drahtloses lokales Netz ist.

**14.** System nach Anspruch 12 oder 13, worin mindestens ein Teil der Nachrichten, die innerhalb des ersten Zugangsnetzes (120) gesendet werden, zwischen Zugangspunkten gesendete Nachrichten sind.

**15.** System nach Anspruch 14, worin der mindestens eine Teil der Nachrichten, die innerhalb des ersten Zugangsnetzes (120) gesendet werden, durch das IAP(Inter-Access Point)-Protokoll definiert sind.

**16.** System nach einem der Ansprüche 12-15, worin die extrahierte zugangsrelevante Information eine Identifikation eines Endgeräts (130) und eine Identifikation eines Zugangspunkts umfasst, mit dem sich das Endgerät assoziiert hat.

**17.** System nach Anspruch 12 oder 13, worin der mindestens eine Lausch-Agent dazu angeordnet ist, mindestens einen Teil der zugangsrelevanten Information durch Schnüffeln von Verkehr auf Benutzerebene für mindestens ein Endgerät (130) zu extrahieren, und worin das System Mittel umfasst, um die zugangsrelevante Information zu verwenden, um Verkehrsvolumen und/oder Durchsatz des mindestens einen Endgeräts zu berechnen.

**18.** System nach Anspruch 12 oder 13, worin mindestens ein Teil der Nachrichten, die innerhalb des ersten Zugangsnetzes (120) gesendet werden, zwischen Zugangspunkten und einem Router gesendet werden.

**19.** System nach Anspruch 18, worin der mindestens eine Teil der Nachrichten, die innerhalb des ersten Zugangsnetzes (120) gesendet werden, durch das LWAP(Light Weight Access Point)-Protokoll definiert sind.

**20.** System nach Anspruch 12 oder 13, worin mindestens ein Teil der Nachrichten, die innerhalb des ersten Zugangsnetzes (120) gesendet werden, zwischen mindestens einem Endgerät und einem Zugangspunkt gesendet werden.

**21.** System nach einem der Ansprüche 12-20, worin mindestens ein Teil der zugangsrelevanten Information, die durch Schnüffeln von innerhalb des ersten Zugangsnetzes (120) gesendeten Nachrichten extrahiert wird, anzeigt, wie oft ein Kanal belegt war, was eine Belastung des Kanals anzeigt.

**Revendications**

**1.** Procédé de gestion de ressources radio pour fournir un accès sans fil à un système de communication, à un nombre de terminaux (130), dans lequel le système de communication comprend un premier réseau d'accès (120) utilisant une première technologie d'accès et un second réseau d'accès (110) utilisant une seconde technologie d'accès distincte de la première technologie d'accès, dans lequel le procédé comprend les étapes ci-dessous consistant à :

recevoir des informations pertinentes à l'accès en provenance du premier réseau d'accès (120) et du second réseau d'accès (110), dans lequel les informations pertinentes à l'accès comportent des informations décrivant l'état du réseau d'accès respectif sur la base de mesures de signaux et/ou des informations fournissant une indication de charge ;

comparer les informations pertinentes à l'accès reçues extraites de messages envoyés au sein du premier réseau d'accès (120) à des informations pertinentes à l'accès reçues à partir du second réseau d'accès (110) ; et déterminer quel réseau d'accès fournit la meilleure connexion à un terminal (130) et quel réseau d'accès devrait être accédé, sur la base d'au moins le résultat de la comparaison des informations pertinentes à l'accès reçues extraites de messages envoyés au sein du premier réseau d'accès aux informations pertinentes à l'accès reçues à partir du second réseau d'accès ;

**caractérisé en ce que**

les informations pertinentes à l'accès reçues comportent des informations extraites par reniflement de messages envoyés au sein du premier réseau d'accès (120), dans lequel les messages sont reniflés par un agent d'écoute, dans lequel le reniflement d'un message comprend la lecture d'une adresse de source, d'une adresse de destination et d'une charge utile de données du message sans influencer le message, de sorte qu'un émetteur et un récepteur du message n'ont pas besoin de savoir que le message a été reniflé.

2. Procédé selon la revendication 1, dans lequel le premier réseau d'accès (120) est un réseau local sans fil.

3. Procédé selon la revendication 1 ou 2, dans lequel au moins une partie des messages envoyés au sein du premier réseau d'accès (120) correspond à des messages envoyés entre des points d'accès.

4. Procédé selon la revendication 3, dans lequel ladite au moins une partie des messages envoyés au sein du premier réseau d'accès (120) est définie par le protocole de point d'inter-accès (IAPP).

5. Procédé selon l'une quelconque des revendications 1 à 4, dans lequel les informations pertinentes à l'accès extraites comportent une identification d'un terminal (130) et une identification d'un point d'accès auquel le terminal est associé.

6. Procédé selon la revendication 1 ou 2, dans lequel au moins une partie des informations pertinentes à l'accès est extraite par reniflement de trafic de plan utilisateur pour au moins un terminal (130), lesquelles informations pertinentes à l'accès sont utilisées en vue de calculer un volume de trafic et/ou un débit dudit au moins un terminal.

7. Procédé selon la revendication 1 ou 2, dans lequel au moins une partie des messages envoyés au sein du premier réseau d'accès (120) est envoyée entre des points d'accès et un routeur.

8. Procédé selon la revendication 7, dans lequel ladite au moins une partie des messages envoyés au sein du premier réseau d'accès (120) est définie par le protocole de point d'accès léger (LWAPP).

9. Procédé selon la revendication 1 ou 2, dans lequel au moins une partie des messages envoyés au sein du premier réseau d'accès (120) est envoyée entre au moins un terminal et un point d'accès.

10. Procédé selon l'une quelconque des revendications 1 à 9, dans lequel au moins une partie des informations pertinentes à l'accès extraites par reniflement de messages envoyés au sein du premier réseau d'accès (120) indique la fréquence à laquelle un canal a été occupé, ce qui indique une charge du canal.

11. Agent d'écoute (202, 203) destiné à être utilisé dans un système de gestion de ressources radio, lequel système fournit un accès sans fil à un système de communication, à un nombre de terminaux (130), dans lequel le système de communication comprend un premier réseau d'accès (120) utilisant une première technologie d'accès et un second réseau d'accès (110) utilisant une seconde technologie d'accès distincte de la première technologie d'accès, **caractérisé en ce que** l'agent d'écoute (202, 203) est agencé de manière à :

extraire des informations pertinentes à l'accès pour au moins le premier réseau d'accès, par reniflement de messages envoyés au sein d'au moins le premier réseau d'accès, dans lequel le reniflement d'un message comprend la lecture d'une adresse de source, d'une adresse de destination et d'une charge utile de données du message sans influencer le message, de sorte qu'un émetteur et un récepteur du message n'ont pas besoin de savoir que le message a été reniflé, et dans lequel les informations pertinentes à l'accès comportent des informations décrivant l'état du réseau d'accès sur la base de mesures de signaux et/ou des informations offrant une indication de charge ; et agencé de manière à

envoyer les informations pertinentes à l'accès à un gestionnaire de sélection d'accès (201) en vue de permettre au gestionnaire de sélection d'accès de déterminer quel réseau d'accès devrait être accédé sur la base des informations pertinentes à l'accès.

12. Système de gestion de ressources radio pour fournir un accès sans fil à un système de communication, à un nombre de terminaux (130), dans lequel le système de communication comporte un premier réseau d'accès (120) agencé de manière à utiliser une première technologie d'accès, et un second réseau d'accès (110) agencé de manière à utiliser une seconde technologie d'accès distincte de la première technologie d'accès, **caractérisé en ce que** le système de gestion de ressources radio comporte :

au moins un agent d'écoute (202, 203) selon la revendication 11 ; et
un gestionnaire de sélection d'accès (201) agencé de manière à comparer les informations pertinentes à l'accès reçues extraites du premier réseau d'accès (120) à des informations pertinentes à l'accès reçues à partir du second réseau d'accès (110); et agencé de manière à déterminer quel réseau d'accès parmi le premier réseau d'accès (120) et le second réseau d'accès (110) fournit la meilleure connexion à un terminal (130) et quel réseau d'accès devrait être accédé, sur la base d'au moins le résultat de la comparaison des informations pertinentes à l'accès extraites du premier réseau d'accès (120) aux informations pertinentes à l'accès reçues à partir du second réseau d'accès (110).

13. Système selon la revendication 12, dans lequel le premier réseau d'accès (120) est un réseau local sans fil.

14. Système selon la revendication 12 ou 13, dans lequel au moins une partie des messages envoyés au sein du premier réseau d'accès (120) correspond à des messages envoyés entre des points d'accès.

15. Système selon la revendication 14, dans lequel ladite au moins une partie des messages envoyés au sein du premier réseau d'accès (120) est définie par le protocole de point d'inter-accès (IAPP).

16. Système selon l'une quelconque des revendications 12 à 15, dans lequel les informations pertinentes à l'accès extraites comportent une identification d'un terminal (130) et une identification d'un point d'accès auquel le terminal est associé.

17. Système selon la revendication 12 ou 13, dans lequel ledit au moins un agent d'écoute est agencé de manière à extraire au moins une partie des informations pertinentes à l'accès par reniflement de trafic de plan utilisateur pour au moins un terminal (130), et dans lequel le système comporte un moyen pour utiliser lesdites informations pertinentes à l'accès en vue de calculer un volume de trafic et/ou un débit dudit au moins un terminal.

18. Système selon la revendication 12 ou 13, dans lequel au moins une partie des messages envoyés au sein du premier réseau d'accès (120) est envoyée entre des points d'accès et un routeur.

19. Système selon la revendication 18, dans lequel ladite au moins une partie des messages envoyés au sein du premier réseau d'accès (120) est définie par le protocole de point d'accès léger (LWAPP).

20. Système selon la revendication 12 ou 13, dans lequel au moins une partie des messages envoyés au sein du premier réseau d'accès (120) est envoyée entre au moins un terminal et un point d'accès.

21. Système selon l'une quelconque des revendications 12 à 20, dans lequel au moins une partie des informations pertinentes à l'accès extraites par reniflement de messages envoyés au sein du premier réseau d'accès (120) indique la fréquence à laquelle un canal a été occupé, ce qui indique une charge du canal.

Figure 1

Figure 2

Figure 3

Figure 4

Access selection manager
201

Layer 2 Switch 122

501 Listening agent

Layer 2 Switch 123

502 Listening agent

AP 124

AP 125

AP 126

AP 127

Figure 5

602                                          600

| 601 IAPP Version (1 byte) | Command (1 byte) | Data (0-n byte) 603 | | | |
|---|---|---|---|---|---|
| | ADD/MOVE-notify | Address Length 604 | Reserved 605 | MAC Address (STA MAC) | Sequence Number (0-4095) |

606    607

Figure 6

601  602                                                              700

| IAPP Version (1 byte) | Comm. (1 byte) | Data (0-n byte) 603 | | | | | |
|---|---|---|---|---|---|---|---|
| | ADD/ MOVE-notify | Address Length 604 | Reserv ed 605 | MAC Address (STA MAC) | Sequence Number (0-4095) 607 | Length of context block 708 | Conte xt block 709 |

606

Figure 7

802 ⌐                                                                                    800 ⌐

| MAC DA 801 | MAC SA (STA MAC) | Length 803 | DSAP 804 | SSAP 805 | Control 806 | XID Information field 807 |
|---|---|---|---|---|---|---|
| Octets: 6 | 2 | 1 | 1 | 1 | 3 | |

6

Figure 8

901 | Listen to messages |

902 | Extract information |

903 | Receive information |

904 | Convert information |

905 | Compare information |

906 | Determine access network |

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02104054 A1
- WO 03069938 A1